Europäisches Patentamt

European Patent Office

Office européen des brevets

(11) Veröffentlichungsnummer: **0 352 467**
**A2**

(12) **EUROPÄISCHE PATENTANMELDUNG**

(21) Anmeldenummer: 89111147.8

(51) Int. Cl.⁴: **B62D 5/06**

(22) Anmeldetag: 20.06.89

(30) Priorität: 23.07.88 DE 3825102

(43) Veröffentlichungstag der Anmeldung:
31.01.90 Patentblatt 90/05

(84) Benannte Vertragsstaaten:
DE FR GB IT

(71) Anmelder: **ALFRED TEVES GMBH**
**Guerickestrasse 7**
**D-6000 Frankfurt/Main 90(DE)**

(72) Erfinder: **Budecker, Ludwig**
**Comeniusstrasse 63**
**D-6000 Frankfurt am Main(DE)**
Erfinder: **Kahrs, Manfred, Dr.**
**Auf der Ahl 93**
**D-6200 Wiesbaden(DE)**
Erfinder: **Baier, Joachim**
**Dahlienweg 4 bis 6**
**D-6450 Hanau(DE)**
Erfinder: **Kunz, Gerhard**
**Weimarer Strasse 13 A**
**D-6307 Linden(DE)**

(74) Vertreter: **Grau, Ulf**
**c/o ALFRED TEVES GMBH Guerickestrasse 7**
**D-6000 Frankfurt (M) 90(DE)**

(54) **Hilfskraftlenkung für Kraftfahrzeuge.**

(57) Um eine kostengünstige und energiesparende Hilfskraftlenkung für Kraftfahrzeuge mit einem mit dem Lenkgestänge gekoppelten Arbeitskolben (15), der in einem Zylinder (12) zwei Arbeitskammern (10,11) voneinander trennt, und einer von einem Elektromotor (1) angetriebenen Pumpe (2), wobei die Arbeitskammern (10,11) mit dem von der Pumpe (2) geförderten Druckmittel beaufschlagbar sind, zu schaffen, ist vorgesehen, daß die Pumpe (2) als reservierbare Pumpe ausgeführt ist, deren Drehrichtung von der Lenkradbetätigungsrichtung vorgegeben ist und daß die Pumpenanschlüsse (3,4) jeweils unmittelbar mit einer Arbeitskammer und mittels einer Ventileinrichtung schaltbar mit einem Behälter (7) verbunden sind.

Fig. 1

## Hilfskraftlenkung für Kraftfahrzeuge

Die Erfindung betrifft eine Hilfskraftlenkung für Kraftfahrzeuge nach dem Oberbegriff des Anspruches 1.

Aus der DE-OS 32 46 137 ist eine derartige Hilfskraftlenkung bekannt, wobei die Verbindung zwischen der Pumpe, welche nur eine Förderrichtung hat und den Arbeitskammern durch ein aufwendiges Lenkventil gesteuert wird. Mit Hilfe eines derartigen Lenkventiles läßt sich zwar die Servowirkung der Lenkhilfe feinfühlig dosieren, jedoch sind sie mit hohen Kosten verbunden. Dadurch, daß die Pumpe der bekannten Lenkeinrichtung permanent arbeitet, ist sie mit einem hohen Energieverbrauch verbunden. Der Erfindung liegt daher die Aufgabe zugrunde, eine gattungsgemäße Hilfskraftlenkung für Kraftfahrzeuge zu schaffen, die besonders kostengünstig aufgebaut ist und dabei einen geringen Energieverbrauch hat.

Diese Aufgabe wird erfindungsgemäß durch die kennzeichnenden Merkmale des Anspruches 1 gelöst. Bei der erfindungsgemäßen Hilfskraftlenkung entfällt somit nicht nur das aufwendige Lenkventil, sondern es ist ferner dafür gesorgt, daß die Pumpe nur dann eingeschaltet ist, wenn eine Lenkbewegung ausgeführt werden soll. Besonders vorteilhaft ist es, wenn die Ventileinrichtung zwischen den Pumpenanschlüssen und dem Behälter durch stromlos offene Magnetventile gebildet wird, da dies zum einen kostengünstige Bauteile sind und zum anderen auf diese Weise dafür gesorgt ist, daß bei Ausfall der Stromversorgung ein manuelles Lenken noch möglich ist.

Eine weitere erfindungsgemäße Lösung sieht vor, daß die Pumpenanschlüsse jeweils unmittelbar mit einer Arbeitskammer verbunden sind und daß die Pumpenanschlüsse mittels einer Ventileinrichtung miteinander verbindbar sind. Hierbei wird nur ein schaltbares Ventil benötigt, welches vorzugsweise ebenfalls als stromlos offenes Magnetventil ausgeführt ist.

Eine bevorzugte Ausführungsform der Erfindung sieht vor, daß an die Verbindung von der Pumpe zu einer Arbeitskammer jeweils eine Druckbegrenzungsvorrichtung angeschlossen ist. Eine besonders energiesparende Erfindungsausführung sieht vor, daß die Pumpe nur bei niedriger Fahrzeuggeschwindigkeit eingeschaltet ist. Dies kann beispielsweise in Abhängigkeit von den Signalen eines elektronischen Tachometers oder in Abhängigkeit von der eingelegten Fahrstufe geschehen.

Es wird also erfindungsgemäß auf ein dosierendes Lenkventil verzichtet, so daß die Arbeitszylinder unmittelbar vom Pumpendruck beaufschlagt werden, da bei den geringen Geschwindigkeiten, bei welchen die Hilfskraft bereit gestellt wird auf eine variable, dem erforderlichen Lenkmoment entsprechende Hilfskraftregelung verzichtet werden kann.

Um einen langsamen Druckaufbau im Arbeitszylinder zu ermöglichen, ist es sinnvoll die Pumpenausgänge mit Blenden zu versehen.

Um einen geeigneten Druckaufbau in den Arbeitszylindern zu erreichen, ist bei einer weiteren Ausführungsform der Erfindung vorgesehen, daß in der elektrischen Energiezuleitung der Pumpe ein elektronisches Zeitglied angeordnet ist.

Weitere vorteilhafte Merkmale sowie die Funktion der Erfindung ergeben sich aus der nachfolgenden Beschreibung anhand der Zeichnung. Hierzu zeigt

Fig. 1 das Schaltschema einer ersten Ausführungsform der Erfindung,

Fig. 2 das Schaltschema einer zweiten Ausführungsform der Erfindung.

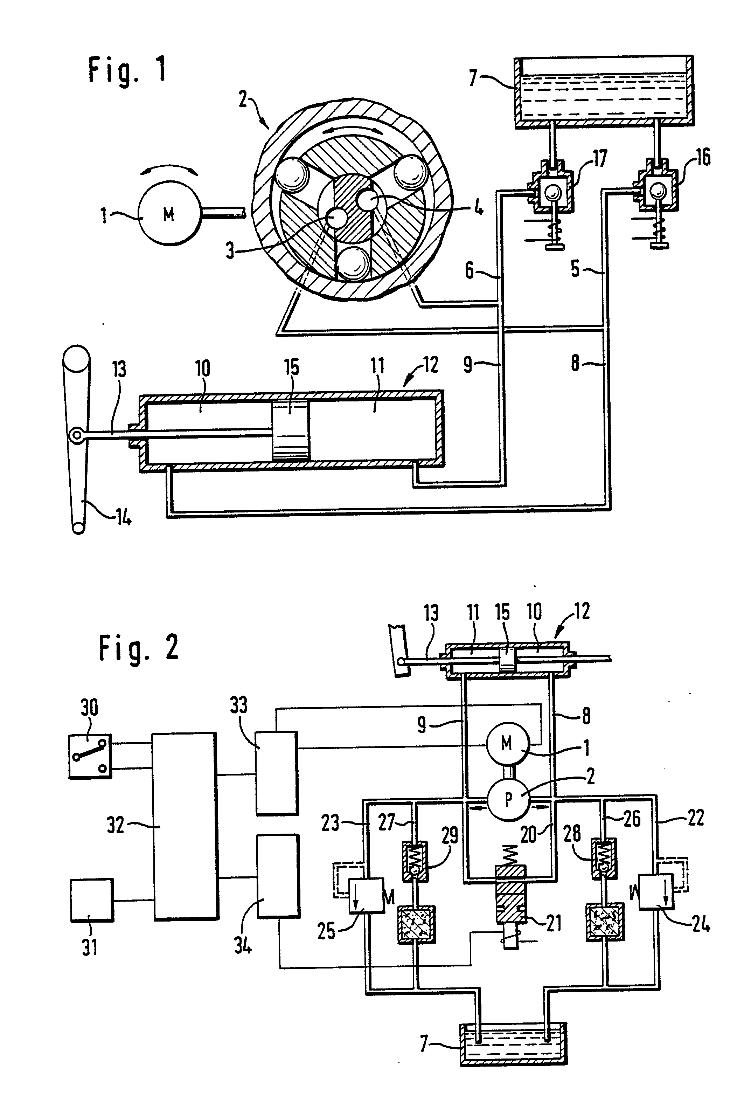

Fig. 1 zeigt einen revesierbaren Elektromotor 1, welcher die reversierbare Pumpe 2 antreibt. Die Pumpenanschlüsse 3 und 4, welche je nach Drehrichtung die Saug- oder Druckseite darstellen, sind mit den Verbindungen 5 und 6 an einen Behälter 7 angeschlossen, über die Leitungen 8 und 9 sind die Pumpenanschlüsse 3 und 4 jeweils mit einer Arbeitskammer 10 bzw. 11 verbunden, welche in dem Arbeitszylinder 12 durch den Arbeitskolben 15 voneinander getrennt sind. Der Arbeitskolben 15 ist mittels Kolbenstange 13 mit dem Lenkstockhebel 14 verbunden. Ein zweiter Lenkstockhebel könnte beispielsweise durch eine weitere spiegelsymmetrisch angeordnete Arbeitszylindereinrichtung betätigt werden.

In den Verbindungen 5 bzw. 6 ist jeweils ein elektromagnetisch betätigbares Sperrventil 16 bzw. 17 angeordnet. Diese Sperrventile sind als stromlos offene Magnetventile ausgeführt.

Wird nun das Lenkrad derart betätigt, daß der Arbeitskolben 15 gemäß Fig. 1 nach links verschoben werden soll, so wird über eine elektrische Schaltung der Elektromotor 1 und damit die Pumpe 2 in der Richtung angetrieben, daß die Pumpe 2 über den Pumpenanschluß 4 Druckmittel fördert und über den Pumpenanschluß 3 Druckmittel aus dem Behälter 7 saugt. Des weiteren sorgt die elektrische Schaltung dafür, daß das Sperrventil 17 geschlossen wird. Somit kann sich in der Leitung 9 und in der Arbeitskammer 11 ein Druck aufbauen, der den Arbeitskolben 15 beaufschlagt.

Bei Ausfall der elektrischen Energieversorgung für Pumpe und Ventile oder wenn die Pumpe bei höheren Geschwindigkeiten ausgeschaltet ist, kann der Arbeitskolben 15 durch mechanische Betätigung verschoben werden, wobei die Sperrventile 16,17 offen sind.

Gemäß dem in der Fig. 2 dargestellten Ausführungsbeispiel der Erfindung ist die reversierbare Elektromotor-Pumpeneinheit 1,2 über die Leitung 8 mit der Arbeitskammer 10 und die über die Leitung 9 mit der Arbeitskammer 11 verbunden. Der Arbeitskolben 15 im Arbeitszylinder 12 ist mit der Kolbenstange 13 mit einem bewegbaren Lenkungsteil verbunden, wobei die Kolbenstange auf beiden Seiten aus den Arbeitszylinder 12 herausgeführt ist, so daß für beide Lenkrichtungen die gleichen Beaufschlagungsfläche am Arbeitskolben 15 zur Verfügung steht (Gleichlauflenkzylinder).

Die Leitungen 8 und 9 sind über die Verbindung 20, in welcher sich ein Magnetventil 21 befindet, verbindbar. Von den Leitungen 8 und 9 zweigen die Leitungen 22 bzw. 23 ab, welche über Druckbegrenzungsventile 24 bzw. 25 zum Behälter 7 führen. An die Leitungen 22 und 23 wiederum schließen sich die Nachsaugleitungen 26 bzw. 27 an, die mit Rückschlagventilen 28 bzw. 29 versehen sind, welche den Durchfluß in Richtung auf den Behälter 7 sperren. Zwischen den Rückschlagventilen 28,29 und dem Behälter 7 ist jeweils ein Filterelement in der Nachsaugleitung angeordnet.

Die Hilfskraftlenkung ist so konzipiert, daß sie nur dann betätigt wird, wenn erstens mit dem Lenkrad eine Lenkbewegung ausgeführt wird und wenn zweitens eine festgelegte Mindestgeschwindigkeit unterschritten ist. Durch die Drehrichtung des Lenkrades wird auch die Drehrichtung der Elektromotor-Pumpeneinheit 1,2 vorgegeben.

Hierzu ist in einem drehelastischen Bauteil an Lenkrad oder Lenksäule ein elektrischer Schalter 30 angeordnet, welcher zu Beginn der Lenkraddrehbewegung betätigt und nach vollführter Lenkbewegung wieder ausgeschaltet wird.

Der geschwindigkeitsabhängige Schalter 31 kann entweder durch ein Geschwindigkeitssignal des Tachometers geschaltet werden oder er wird durch Einlegen des ersten Ganges oder des Rückwärtsganges geschaltet. Bei der fahrgangabhängigen Schalterbetätigung kann beispielsweise durch ein Signal der Zündspule das System oberhalb einer bestimmten Motordrehzahl abgeschaltet werden.

Die Schalter 30 und 31 sind mit der Logikeinheit 32 verbunden, welche die Leistungsendstufen 33,34 steuert. Durch die Logikschaltung 32 kann dafür gesorgt werden, daß die Pumpe 2 nur dann anläuft, wenn das Magnetventil 21 in Schließstellung ist; sinnvoll wäre auch eine gleichzeitige Schaltung von Pumpe und Magnetventil.

Da das Magnetventil 21 als stromlos offenes Ventil ausgeführt ist, kann bei Ausfall der elektrischen Energie oder dann, wenn die Hilfskraftlenkung oberhalb eines bestimmten Geschwindigkeitsbereiches ausgeschaltet ist, das Druckmittelvolumen der Arbeitskammern durch die mechanische Lenkung drucklos über die Verbindung 20 verschoben werden.

Bezugszeichenliste

1 Elektromotor
2 Pumpe
3 Pumpenanschluß
4 Pumpenanschluß
5 Verbindung
6 Verbindung
7 Behälter
8 Leitung
9 Leitung
10 Arbeitskammer
11 Arbeitskammer
12 Arbeitszylinder
13 Kolbenstange
14 Lenkstockhebel
15 Arbeitskolben
16 Sperrventil
17 Sperrventil
20 Verbindung
21 Magnetventil
22 Leitung
23 Leitung
24 Druckbegrenzungsvorrichtung
25 Druckbegrenzungsvorrichtung
26 Nachsaugleitung
27 Nachsaugleitung
28 Rückschlagventil
29 Rückschlagventil
30 Schalter
31 Schalter
32 Logikeinheit
33 Leistungsendstufe
34 Leistungsendstufe

**Ansprüche**

1. Hilfskraftlenkung für Kraftfahrzeuge mit einem mit einem Lenkgestänge gekoppelten Arbeitskolben, der in einem Zylinder zwei Arbeitskammern voneinander trennt, und einer von einem Elektromotor angetriebenen Pumpe, wobei die Arbeitskammern mit dem von der Pumpe geförderten Druckmittel beaufschlagbar sind, dadurch **gekennzeichnet**, daß die Pumpe (2) als reversierbare Pumpe ausgeführt ist, deren Drehrichtung von der Lenkradbetätigungsrichtung vorgegeben ist und daß die Pumpenanschlüsse (3,4) jeweils unmittelbar mit einer Arbeitskammer (10,11) und mittels einer Ventileinrichtung (16,17) schaltbar mit einem Behälter (7) verbunden sind.

2. Hilfskraftlenkung für Kraftfahrzeuge mit einem mit einem Lenkgestänge gekoppelten Arbeitskolben, der in einem Zylinder zwei Arbeitskammern voneinander trennt und eine von einem Elektromotor angetriebenen Pumpe, wobei die Arbeitskammern mit dem von der Pumpe geförderten Druckmittel beaufschlagbar sind, dadurch **gekennzeichnet**, daß die Pumpe (2) als reversierbare Pumpe ausgeführt ist, deren Drehrichtung von der Lenkradbetätigungsrichtung vorgegeben ist und daß die Pumpenanschlüsse (3,4) jeweils unmittelbar mit einer Arbeitskammer (10,11) und das die Pumpenanschlüsse mittels einer Ventileinrichtung (21) miteinander verbindbar sind.

3. Hilfskraftlenkung nach einem der vorhergehenden Ansprüche, dadurch **gekennzeichnet**, daß die Ventileinrichtung durch mindestens ein stromlos offenes Magnetventil (16,17,21) gebildet ist.

4. Hilfskraftlenkung nach Anspruch 2, dadurch **gekennzeichnet**, daß an die Verbindung von der Pumpe (2) zur Arbeitskammer (10,11) jeweils eine Nachsaugleitung (26,27) angeschlossen ist, die ein Rückschlagventil (28,29) aufweist, das den Durchfluß von der Pumpe (2) zum Behälter (7) sperrt.

5. Hilfskraftlenkung nach einem der vorhergehenden Ansprüche, dadurch **gekennzeichnet**, daß an die Verbindung von der Pumpe (2) zur Arbeitskammer (10,11) jeweils eine Druckbegrenzungsvorrichtung (24,25) angeschlossen ist.

6. Hilfskraftlenkung nach einem der vorhergehenden Ansprüche, dadurch **gekennzeichnet**, daß die Pumpe (2) nur bei niedriger Fahrzeuggeschwindigkeit eingeschaltet ist.

7. Hilfskraftlenkung nach einem der vorhergehenden Ansprüche, dadurch **gekennzeichnet**, daß die Pumpe (2) nur im niedrigsten Fahrgang und im Rückwärtsgang eingeschaltet ist.

8. Hilfskraftlenkung nach einem der vorhergehenden Ansprüche, dadurch **gekennzeichnet**, daß der Zylinder (12) in der mechanischen Lenkung integriert ist.

9. Hilfskraftlenkung nach einem der vorhergehenden Ansprüche, dadurch **gekennzeichnet**, daß in den Pumpenanschlüssen (3,4) Blenden vorgesehen sind.

10. Hilfskraftlenkung nach einem der vorhergehenden Ansprüche, dadurch **gekennzeichnet**, daß in der elektrischen Energiezuleitung der Pumpe (2) ein elektronisches Zeitglied vorgesehen.

11. Hilfskraftlenkung nach einem der vorhergehenden Ansprüche, dadurch **gekennzeichnet**, daß die den Arbeitskammern (10,11) zugeordneten Druckbeaufschlagungsflächen des Arbeitskolbens (15) gleich groß sind.

Fig. 1

Fig. 2